# EUROPEAN PATENT SPECIFICATION

(11) **EP 1 487 893 B1**
(45) Date of publication and mention of the grant of the patent: **02.08.2006**
(21) Application number: 03724933.1
(22) Date of filing: 24.03.2003
(51) Int. Cl.: C08F 297/04, C09J 153/02, C08L 53/02

(54) **POLY (STYRENE-BUTADIENE-STYRENE) POLYMERS HAVING A HIGH VINYL CONTENT IN THE BUTADIENE BLOCK AND HOT MELT ADHESIVE COMPOSITIONS COMPRISING SAID POLYMERS**
POLY(STYROL-BUTADIEN-STYROL)BLOCKCOPOLYMERE MIT HOHEM VINYL-GEHALT IM BUTADIENBLOCK UND DARAUF BASIERENDE SCHMELZKLEBSTOFFE
POLYMERES POLY (STYRENE-BUTADIENE-STYRENE) A TENEUR ELEVEE EN VINYLE DANS LE BLOC BUTADIENE ET COMPOSITIONS D'ADHESIFS THERMOFUSIBLES LES CONTENANT

(30) Priority: 26.03.2002 EP 02076178
(43) Date of publication of application: 22.12.2004
(73) Proprietor: KRATON Polymers Research B.V., 1030 BH Amsterdam (NL)
(72) Inventor: VERMUNICHT, Geert, E., A., B-1348 Louvain-LaNeuve (BE); VAN DE VLIET, Birgitte, M., L Avenue Jean Monnet 1, B-1348 Louvain-LaNeuve (BE); SOUTHWICK, Jeffrey, G., Houston, TX 77094 (US)
(74) Representative: Kortekaas, Marcel C.J.A.
(86) International application number: PCT/EP2003/003172
(87) International publication number: WO 2003/080692

(56) References cited:
- EP-A- 0 659 787
- US-A- 4 792 584
- US-A- 5 777 039

## Description

### Summary of the invention

The present invention comprises a poly(styrenebutadiene-styrene) polymer having a high vinyl content in the butadiene block for packaging tape adhesives and a hot melt polymer adhesive composition comprising said poly(styrene-butadiene-styrene) polymers (SBS).

More particularly the present invention concerns a hot melt adhesive composition having equal or better properties compared to emulsion acrylic tapes. The adhesive composition of the present invention has excellent tack, adhesive strength, creep resistance and also an excellent treatment capability at high temperature and high box closing properties.

The adhesives of the present invention are suitable for adhesion tapes, labels, pressure sensitive sheets, tacky adhesives for fixing carpets etc.

The advantages of the adhesives of the present invention are that they are lower in cost compared to emulsion acrylic based adhesives or poly(styrene-isoprene-styrene) based adhesives (SIS) while having comparable or better properties.

### Background of the Invention

Hot melt adhesives are known, for instance, in the JP 2001787 describing tacky adhesive compositions for tapes comprising a block copolymer of a vinylaromatic hydrocarbon and a high vinyl polybutadiene block. The composition comprises a block copolymer, a tackifying resin and at least one phenol compound. The block copolymer is composed of at least one polymeric block mainly containing butadiene. It has a vinylaromatic hydrocarbon content of 10-36% by weight and the butadiene portions have a vinyl content of 15-55%.

The JP 63182386 discloses sticky block copolymer compositions containing a vinyl aromatic-butadiene block copolymer, a tackifying resin and a phenolic compound. The block copolymer is mainly composed of vinyl aromatic hydrocarbon and at least one polymer block composed of polybutadiene.

The EP-A-0 243 956, (corresponding with US-4,792,584A), discloses an adhesive composition comprising a block copolymer containing at least one vinylaromatic hydrocarbon block and one butadiene containing block, wherein the content of the vinylaromatic hydrocarbon block and the 1,2-vinyl content in the butadiene portion are in specific ranges of from 10 to 30 wt% and from 20 to 50 wt% respectively, and wherein the sun of both contents is between 40 and 70. In addition, the polymers that have been used have a melt flow rate of 5g/10min (200°C, 5kg).

These hot melt compositions however do not have the same properties as those based on SIS in respect of the tack, adhesive strength creep resistance and treatment capacity at high temperature as well as high box closing properties.

In said document the molecular weight of the living poly(vinyl aromatic) block prepared in the first polymerization step was not regarded as a relevant feature.

Nowhere in said document was disclosed that the (vinyl aromatic) block copolymers therein could be improved by selecting those, which met simultaneously the criteria of (vinyl aromatic) content, coupling efficiency, the molecular weight of the initially prepared living poly(vinyl aromatic) block, and vinyl content in the poly(butadiene) block.

The object of the invention is a hot melt adhesive composition having equal or better properties compared to prior art adhesives, especially the acrylic emulsion based adhesives while being cheaper than poly(styrene-isoprene-styrene) (SIS) based adhesives.

Poly(styrene-isoprene-styrene) polymers are currently rarely used in pressure sensitive adhesives despite their relative low cost. The nain reason for this is their high viscosity and tendency to cross-link so that the processing step becomes a limiting factor.
Surprisingly a new SBS polymer has been developed with molecular parameters suitable for to hot melt adhesive applications.

### Brief description of the invention

Accordingly, the inventors have provided a poly(styrene-butadiene-styrene) polymer showing in combination :
i) a polystyrene content (PSC) within a range of 15-20% by weight,
ii) a coupling efficiency of 50-80%,
iii) a step I (MW) between 9000 and 10000 kg/mol
iv) a vinyl content in the butadiene block between about 20-45% by weight, and
v) a MFR of equal to or greater than 10.

Further the inventors have provided a hot melt adhesive composition comprising:
a) a poly(styrene-butadiene-styrene) polymer having a high vinyl content in the butadiene block
b) a tackifying resin
c) a plasticizer
d) an anti-oxidant
wherein said polymer has :
i) a polystyrene content (PSC) within a range of 15-20% by weight,
ii) a coupling efficiency (CE) of 50-80%,
iii) a step I (MW) between 9000 and 10000 kg/mol
iv) a vinyl content in the butadiene block between about 20-45% by weight, and
v) a MFR of equal to or greater than 10.

### Detailed description of the invention

Preferred poly(styrene-butadiene-styrene) polymers having a high vinyl content in the butadiene block have a polystyrene content between 16-19% by weight, more preferably 16-18%. Likewise the preferred polymers have a coupling efficiency between 60-75%, more preferably 65-70%. Moreover the preferred polymers have a vinyl content between 25-40% by weight, more preferably 30-35 % by weight.

A preferred embodiment of the hot-melt adhesive composition according to the present invention comprises a polymer, having the following characteristics:

| | |
|---|---|
| PSC content (%) | 16 **―** 19 |
| CE (%) | 60 **―** 75 |
| Step I (MW) (kg/mol) | 9,400 - 9.600, and |
| vinyl (%) | 25 - 40 |

In a more preferred embodiment of the hot-melt adhesive composition of the present invention the polymer has the following characteristics:

| | |
|---|---|
| PSC content (%) | 19 |
| CE (%) | 70 |
| Step I (MW) (kg/mol) | 9,500 |
| vinyl (%) | 30 |

A more preferred hot-melt adhesive composition according to the present invention has;
a) hot melt viscosity at 170°C during 24 hours lower than 100 Pa.S
b) Rolling back tack: 1-5 cm
c) Flap test, 500 g weight; higher than 120 minutes
d) HP 40°C, 1 kg weight: higher than 50 minutes

Suitable styrenes useful for preparing the polystyrene blocks of the SBS of the present invention are for example styrene, o-methylstyrene, p-methylstyrene, m-methylstyrene, p-tert-butylstyrene, dimethylstyrene, and various other alkyl-substituted styrenes, alkoxy-substituted styrenes, vinylnaphthalene and vinyl xylene. The alkyl and alkoxy groups of the alkyl-substituted or alkoxy substituted styrenes respectively preferably contain from 1 to 6 carbon atoms, preferably from 1 to 4 carbon atoms. It is to be noticed that this list is merely illistrative and should not have a limiting effect. The polystyrene blocks may comprise minor amounts (e.g. up to 5 % by weight) of copolymerizable monomers.
In the preparation of tie polymers according to the invention any suitable difunctional coupling agent can be used. Alternatively, the same polymer may be produced by what is called "full sequential'.

The coupling agent may (not preferred) be a multifunctional coupling agent. Suitable coupling agents are dibromo ethane diglycidyl ether of bisphenol A and such like components as known in the art.

Suitable tackifiers for preparing the hot melt adhesive composition of the present invention are well-known in the art. They may for example, be selected from the group consisting of compatible C₅ hydrocarbon resins, hydrogenated C₅ hydrocarbon resins, styrenated C₅ resins, C₅/C₉ resins, styrenated terpene resins, fully hydrogenated or partially hydrogenated C₉ hydrocarbon resins, rosins esters, rosins derivatives and mixtures thereof.

The composition according to the present invention preferably comprises from 50 to 200 parts by weight, more preferably from 100 to 150 parts by weight of a tackifier.

The preferred tackifying resins useful in the present invention are selected within the group of HERCOTAC 205 (trademark), an aromatic modified hydrocarbon resin of the Hercules grade range, used for natural rubber based packaging tapes; PICCOTAC 212 (trademark) a purely aliphatic resin widely used in hot melt pressure sensitive adhesives; MBG 223,a Hercules development grade which is a 35% aromatic modified C₅ resin, developed for tackifying SBS based adhesives; MBG 264,a partially hydrogenated hydrocarbon resin used in radiation curable adhesives based on SBS; and A 2514 which is a liquid developmental resin, with a very low softening point to be used in combination with a solid resin to increase the tack properties.

Suitable plasticizers for use in preparing the hot melt adhesive compositions of the present invention include plasticizing oils like low aromatic content hydrocarbon oils that are paraffinic or naphthenic in character (carbon aromatic distribution ≤5%, preferably ≤2%, more preferably 0% as determined according to DIN 51378). Those products are commercially available from the Royal Dutch/Shell Group of companies, like SHELLFLEX, CATENEX, and ONDINA oils. Other oils include KAYDOL oil from Witco, or TUFFLO oils from Arco. Other plasticizers include compatible liquid tackifying resins like REGALREZ R-1018. (SHELLFLEX, CATENEX, ONDINA, KAYDOL, TUFFLO and REGALREZ are trademarks).

Other plasticizers might also be added, like olefin oligomers; low molecular weight polymers (≤ 30,000 g/mol) like liquid polybutene or liquid polyisoprene copolymers, like liquid styrene/isoprene copolymers or hydrogenated styrene/isoprene copolymers and liquid alpha-olefin polymers; vegetable oils and their derivatives; or paraffin and microcrystalline waxes.

The preferred plasticizers useful in the present invention are for example, CATENEX N956, CATENEX S946, or EDELEX 945.

The composition according to the present invention may, but need not, contain a plasticizer. If it does, then the composition comprises up to 100 parts by weight, preferably 5 to 75 parts by weight, more preferably 10 to 40 parts by weight of a plasticizer.

Several types of antioxidants can be used, either primary antioxidants like hindered phenols or secondary antioxidants like phosphite derivatives or blends thereof. Examples of commercially available antioxidants are IRGANOX 565 from Ciba-Geigy (2.4-bis-(n-octylthio)-6-(4-hydroxy-3,5-di-tertiary-butyl anilino)-1,3,5-triazine), IRGANOX 1010 from Ciba-Geigy (tetrakis-ethylene-(3,5-ditertiary-butyl-4-hydroxy-hydrocinnamate)methane), IRGAFOS 168 from Ciba-Geigy or POLYGARD HR from Uniroyal (tris-(2,4-di-tertiary-butyl-phenyl)phosphite). Other antioxidants developed to protect the gelling of the polybutadiene segments can also be use, like the SUMILIZER GS from Sumitomo (2[1-(2-hydroxy-3,5-di-ter-pentylphenyl)-ethyl)]-4,6-di-tert-pentylphenylacrylate); SUMILIZER T-PD from Sumitomo (pentaerythrythyltetrakis(3-dodecylthiopropionate)); or mixtures thereof. (IRGANOX, IRGAFOS, POLYGARD and SUMILIZER are trademarks).

The antioxidant which can be used in the present invention are IRGANOX 1010, IRGANOX 3052, IRGAFOS 168, SUMILIZER GS, SUMILIZER TPD. Extensive research has revealed that optimized antioxidant packages are a combination of IRGANOX 1010/IRGANOX 3052/IRGAFOS 168 or a combination of SUMILIZER GS/SUMILIZER TPD which gave stable hot melts at 180°C.

It should be noticed that the lists of additives disclosed herein above are merely examples and are not limitative.

Test methods have been performed on the adhesives in order to evaluate those of the present invention which are able to compete with acrylic tapes.

These tests are:
1) Hot melt viscosity stability
   Brookfield hot melt viscosity (HMV) at 170°C during 24 hours
2) Gel content
   Gel content on adhesive before (ini) and after HMV measurement (24 h) on 50 µ filter
3) Tack property
   Rolling Ball Tack (RBT)
4) Test on cardboard
   HP 40°C, 1 kg weight
   Flap test, 500 g weight

These tests have shown that in order to attain the object of the present invention, the adhesive composition of (poly(styrene-butadiene-styrene) polymers having a high vinyl content in the butadiene blocks based packaging tapes) ideally should fulfill the following requirements:

| | | |
|---|---|---|
| RBT: | 1-5 cm | (acceptable < 20 cm) |
| Flap test: | 120-250 minutes | (acceptable > 100 minutes) |
| HP 40°C: | 50-100 minutes | (acceptable > 40 minutes) |
| HMV | < 100 Pa.s. | |

The tests have been performed with the following polymers A to H, whereby A to F are comparative examples while G and H are embodiments of the present invention.

**Table 1**

| | A | B | C | D | E | F* | G | H |
|---|---|---|---|---|---|---|---|---|
| Step I (mol/kg) | 11,300 | 11,800 | 11,100 | 11,600 | 11,100 | 10,004 | 9,100 | 9,100 |
| Step III (mol/kg) | 193,000 | 223,800 | 205,300 | 222,900 | 199,800 | 188,400 | 182,100 | 175,200 |
| CE (%) | 65.5 | 82.6 | 53.8 | 17.6 | 23 | 79 | 67 | 67 |
| vinyl (%) | 40.5 | 7.6 | 36 | 9.2 | 55 | 30 | 32 | 33.6 |
| PSC (%) | 18.7 | 17.9 | 17.9 | 17.5 | 18.8 | 19 | 18 | 16 |
| MFR 200°C, 5 kg | 3.0 | | | | | 5 | 14 | 10 |

| | | | | | | | | |
|---|---|---|---|---|---|---|---|---|
| * An example in accordance with EP 0 243 956 | | | | | | | | |

The properties are shown in Table 2. In that table, the formulation 1 is a general formulation.

**Table 2**

| Polymer | A | B | C | D | E |
|---|---|---|---|---|---|
| Form. 1 | | | | | |
| HMV@170, Pa.s | 57 | 198 | 51 | 26 | 33 |
| RBT (cm) | 15 | 3 | 6 | 1 | 21 |
| HP kraft@40°C, min | 41 | 8 | 9 | 2 | 4 |
| Flap kraft@23°C, min | 548 | 118 | 82 | 22 | 148 |

Form. 1 = 100 phr SBS polymer / 125 phr HERCOTAC 205 / 40 phr CATENEX N956 / 1 phr IRGANOX 1010 / 1 phr IRGANOX 3052/1 phr IRGAFOS 168
It is to be pointed out that in the formulation 1 the amount of the plasticizer CATENEX^{™} N 956 (40 phr) is too high and this causes bleeding and migration of the adhesive.

Although the formulation based on polymer A exhibits an acceptable balance of properties, this formulation is not acceptable as polymer A has a too low melt flow rate (MFR < 10).

Since formulations with lower oil contents are preferred, for example below 20 phr, polymers with lower step I (MW) have been compared to polymers A to E. These polymers are F, G and H in table 1 and the characteristics of these polymers are indicated in that table 1.

### Table 3

In another text a formulation 2 is prepared with the SBS polymers F and G, but containing only 20 phr of the plasticizer CATENEX^{™} N 956.

Form 2: 100 phr SBS polymer / 125phr HERCOTAC^{™} 205 /20 phr CATENEX^{™} N956 / 1phr IRGANOX^{™} 1010 / 1phr IRGANOX^{™} 3052 / 1phr IRGAFOS^{™} 168

The results of the text are shown hereunder.

| | F | G |
|---|---|---|
| HMV@170, Pa.s | 190 | 63 |
| RBT (cm) | 5 | 27 |
| HP kraft@40°C, min | 51 | 19 |
| Flap kraft@23°C, min | 708 | 135 |

It will be seen that F, having a maximum step I MW of more than 10,000, and a maximum coupling efficiency value of 79% and a MFR of 5, results in a far too high HMV (hot melt viscosity) for a packaging tape formulation rendering it hardly processable so that G is the polymer with the best balance of properties.

It should be pointed out that the properties of the adhesives could be further improved in optimizing the formulation. The most suitable molecule is specified by the parameters hereunder which result in a MFR of 10. The target molecule has the following characteristics:

| | |
|---|---|
| Step I (kg/mol) | 9,400-9,600, preferably about 9,500 |
| vinyl (%) | 25-40, preferably about 30 |
| PSC (%) | 16-19, preferably about 19 |
| CE (%) | 60-75, preferably about 70 |

In the following tables, examples are shown where one can see how the properties of the adhesive composition can be altered by changing the amounts of the several additives. In table 4 has been used the polymer G and in table 5 has been used the polymer H.

**Table 4**

| Ingredients | F1A | F1B | F2A | F2B | F3 | F4 |
|---|---|---|---|---|---|---|
| Polymer G | 100 | 100 | 100 | 100 | 100 | 100 |
| HERCOTAC 205 | 125 | 125 | 83 | 83 | 94 | - |
| PICCOTAC 212 | - | - | 42 | 42 | 46 | - |
| MBG223 | - | - | - | - | - | 140 |
| CATENEX N956 | 20 | 20 | 20 | 20 | 30 | 30 |
| I1010/I3052/I168 | 3*1 | 3*1 | 3*1 | 3*1 | 3*1 | 3*1 |

| Coating weight, µ | 17 | 24 | 18 | 25 | 18 | 20 |
|---|---|---|---|---|---|---|
| HMV, 170°C, (ini) Pa.s | 63 | 63 | 61 | 61 | 40 | 40 |
| RBT, cm | 27 | 5.5 | >30 | >30 | >30 | 7 |
| HP kraft@40°C, min | 19 | 27 | 31 | 55 | 30 | 31 |
| Flap kraft@23°C, min | 135 | 230 | 308 | 681 | 221 | 179 |

3*1 means 1/1/1

**Table 5**

| | F1 | F2 | F4 | F5 | F6 | F7 |
|---|---|---|---|---|---|---|
| Polymer H | 100 | 100 | 100 | 100 | 100 | 100 |
| HERCOTAC 205 | 125 | 105 | 112.5 | 100 | 125 | 125 |
| PICCOTAC 212 | - | - | 12.5 | 25 | - | - |
| CATENEX N956 | 20 | 15 | 20 | 20 | | |
| CATENEX S946 | | | | | 20 | |
| EDELEX 945 | | | | | | 20 |
| I1010/I168/I3052 | 3*1 | 3*1 | 3*1 | 3*1 | 3*1 | 3*1 |
| Coating weight, µ | 18 | 18 | 20 | 20 | 19 | 19 |
| HMV(ini), 170°C, Pa.s | 100 | 120 | 100 | 90 | 100 | 80 |
| RBT, cm | 29 | 24 | 24 | 30 | 15 | 25 |
| HP kraft@40°C, min | 26 | 36 | 39 | 31 | 37 | 33 |
| Flap kraft@23°C, min | 217 | 239 | 311 | 383 | | 239 |

It is seen in Table 4 that the compositions F1B and F4 furnish very valuable adhesives falling within the limits of properties desired for the adhesives of the present invention.

Various changes can be made in the above compositions, and products without departing from the scope of the appended claims.

## Claims

1. Poly(styrene-butadiene-styrene) polymer, showing in combination
i) a polystyrene content (PSC) within a range of 15-20% by weight
ii) a coupling efficiency (CE) of 50-80%
iii) a step I molecular weight (MW) between 9,000 and 10,000 kg/mol
iv) a vinyl content in the butadiene block between 20-45%, and
v) a MFR of equal to or greater than 10.

2. The polymer according to claim 1 wherein the polystyrene content (PSC) is within a range of 16-19% by weight, preferably 15-18% by weight.

3. The polymer according to claim 1 wherein the coupling efficiency is within a range of 60-75%, preferably 65-70%.

4. The polymer according to claim 1 wherein the vinyl content amounts to 25-40% preferably 30-35 % by weight.

5. Hot melt adhesive composition comprising:
a) a poly(styrene-butadiene-styrene) polymer having a high vinyl content in the butadiene block according to any one of claims 1 to 4;
b) a tackifying resin;
c) optionally a plasticizer; and
d) an anti-oxidant.

6. The hot melt adhesive composition according to claim 5 **characterized in that** said polymer has the following characteristics
| | |
|---|---|
| Polystyrene content (PSC) (%) | 16-19 |
| CE (%) | 60-75 |
| Step I (MW) (kg/mol) | 9,400-9,600, and |
| Vinyl (%) | 25-40. |

7. The hot melt adhesive composition according to claim 6 **characterized in that** said polymer has the following characteristics Polystyrene content PSC)(%) 19
| | |
|---|---|
| CE (%) | 70 |
| Step I (MW) (kg/mol) | 9,500 |
| Vinyl (%) | 30. |

8. The hot melt adhesive composition according to any one of claims 5 to 7 having
a) hot melt viscosity at 170°C during 24 hours lower than 100 Pa.S
b) Rolling back tack: 1-5 cm
c) Flap test, 500 g weight: higher than 120 minutes
d) HP 40°C, 1 kg weight: higher than 50 minutes

9. The hot melt adhesive composition according to any one of claims 5 to 8 wherein the amount of tackifier in the composition comprises 50 to 200 parts by weight, preferably 100 to 150 parts.

10. The hot melt adhesive composition according to any one of claims 5 to 9 wherein the amount of plasticizer in the composition is up to 100 parts by weight, preferably 5 to 75 parts by weight.

## Patentansprüche

1. Poly(styrol-butadien-styrol)polymer aufweisend in Kombination
i) einen Polystyrolgehalt (PSC) in einem Bereich von 15-20 Gew.-%
ii) eine Kopplungseffizienz (CE) von 50-80%
iii) einen Schritt I Molekulargewicht (MW) zwischen 9.000 und 10.000 kg/mol
iv) einen Vinylgehalt im Butadienblock zwischen 20-45% und
v) ein MFR von gleich oder größer als 10.

2. Polymer gemäß Anspruch 1, worin der Polystyrolgehalt (PSC) im Bereich von 16-19 Gew.-% liegt, vorzugsweise 16-18 Gew.-%.

3. Polymer gemäß Anspruch 1, worin die Kopplungseffizienz in einem Bereich von 60-75% liegt, vorzugsweise 65-70%.

4. Polymer gemäß Anspruch 1, worin der Vinylgehalt 25-40% beträgt, vorzugsweise 30-35 Gew.-%.

5. Heißschmelzklebstoffzusammensetzung umfassend:
a) ein Poly(styrol-butadien-styrol)polymer, das einen hohen Vinylgehalt im Butadienblock aufweist gemäß einem der Ansprüche 1-4;
b) ein Harz zur Erhöhung der Klebrigkeit;
c) wahlweise einen Weichmacher; und
d) ein Antioxidans.

6. Heißschmelzklebstoffzusammensetzung gemäß Anspruch 5, **dadurch gekennzeichnet, dass** das Polymer die folgenden Eigenschaften aufweist:
| | |
|---|---|
| Polystyrolgehalt (PSC) (%) | 16-19 |
| CE (%) | 60-75 |
| Schritt I (MW) (kg/mol) | 9.400-9.600 und |
| Vinyl (%) | 25-40. |

7. Heißschmelzklebstoffzusammensetzung gemäß Anspruch 6, **dadurch gekennzeichnet, dass** das Polymer die folgenden Eigenschaften aufweist:
| | |
|---|---|
| Polystyrolgehalt (PSC) (%) | 19 |
| CE (%) | 70 |
| Schritt I (MW) (kg/mol) | 9.500 |
| Vinyl (%) | 30. |

8. Heißschmelzklebstoffzusammensetzung gemäß einem der Ansprüche 5 bis 10 aufweisend
a) eine Heißschmelzviskosität bei 170°C während 24 Stunden von weniger als 100 Pa*S
b) eine Schrumpfung nach Dehnung von 1-5 cm
c) Klapptest, 500g Gewicht: mehr als 120 Minuten
d) HP 40°C, 1 kg Gewicht: mehr als 50 Minuten.

9. Heißschmelzklebstoffzusammensetzung gemäß einem der Ansprüche 5 bis 8, worin die Menge an Harz zur Erhöhung der Klebrigkeit in der Zusammensetzung 50-200 Gewichtsteile umfasst, vorzugsweise 100-150 Gewichtsteile.

10. Heißschmelzklebstoffzusammensetzung gemäß einem der Ansprüche 5 bis 9, worin die Menge an Weichmacher in der Zusammensetzung bis zu 100 Gewichtsteile beträgt, vorzugsweise 5-75 Gewichtsteile.

## Revendications

1. Polymère de poly(styrène-butadiène-styrène), montrant en combinaison :
i) une teneur en polystyrène (PSC) allant de 15-20 % en poids;
ii) une efficacité de couplage (EC) de 50-80 %;
iii) un poids moléculaire (PM) d'étape I entre 9 000 et 10 000 kg/mole;
iv) une teneur en vinyle dans le bloc de butadiène entre 20-45 %; et
v) un MFR égal ou supérieur à 10.

2. Polymère suivant la revendication 1, dans lequel la teneur en polystyrène (PSC) se situe dans une plage de 16-19 % en poids, avantageusement de 16-18 % en poids.

3. Polymère suivant la revendication 1, dans lequel l'efficacité de couplage se situe dans une plage de 60-75 %, avantageusement 65-70 %.

4. Polymère suivant la revendication 1, dans lequel la teneur en vinyle s'élève à 25-40 %, avantageusement 30-35 % en poids.

5. Composition d'adhésif thermofusible comprenant :
a) un polymère de poly(styrène-butadiène-styrène) ayant une teneur en vinyle élevée dans le bloc de butadiène suivant l'une quelconque des revendications 1 à 4;
b) une résine assurant un collage;
c) éventuellement un plastifiant; et
d) un antioxydant.

6. Composition d'adhésif thermofusible suivant la revendication 5, **caractérisée en ce que** ledit polymère a les caractéristiques suivantes :
| | |
|---|---|
| teneur en polystyrène (PSC) (%) | 16-19 |
| EC (%) | 60-75 |
| étape I (PM) (kg/mole) | 9 400-9 600, et |
| vinyle (%) | 25-40. |

7. Composition d'adhésif thermofusible suivant la revendication 6, **caractérisée en ce que** le polymère précité a les caractéristiques suivantes :
| | |
|---|---|
| teneur en polystyrène (PSC) (%) | 19 |
| EC (%) | 70 |
| étape I (PM) (kg/mole) | 9 500 |
| vinyle (%) | 30. |

8. Composition d'adhésif thermofusible suivant l'une quelconque des revendications 5 à 7 ayant :
a) viscosité de masse fondue à 170°C pendant 24 heures de moins de 100 Pa.s
b) collage à la bille roulante : 1-5 cm
c) test de la patte, poids de 500 g : plus de 120 minutes
d) HP à 40°C, poids de 1 kg : plus de 50 minutes.

9. Composition d'adhésif thermofusible suivant l'une quelconque des revendications 5 à 8, dans laquelle la quantité d'agent assurant un collage dans la composition constitue 50 à 200 parties en poids, avantageusement 100 à 150 parties.

10. Composition d'adhésif thermofusible suivant l'une quelconque des revendications 5 à 9, dans laquelle la quantité de plastifiant dans la composition est jusqu'à 100 parties en poids, avantageusement de 5 à 75 parties en poids.
